# FASCICULE DE BREVET EUROPEEN

(11) **EP 0 581 634 B1**
(45) Date de publication et mention de la délivrance du brevet: **17.09.1997**
(21) Numéro de dépôt: 93401803.7
(22) Date de dépôt: 12.07.1993
(51) Int. Cl.: G02B 6/44

(54) **Dispositif de jonction de câbles optiques sous-marins**
Verbindungsvorrichtung für faseroptische Unterseekabel
Junction device for undersea optical cables

(30) Priorité: 16.07.1992 FR 9208799; 01.02.1993 FR 9301032
(43) Date de publication de la demande: 02.02.1994
(73) Titulaire: ALCATEL CABLE, F-92100 Clichy (FR)
(72) Inventeur: Daguet, Bruno, F-62100 Calais (FR); Marlier, Gery, F-62100 Calais (FR)
(74) Mandataire: Buffiere, Michelle

(56) Documents cités:
- EP-A- 0 091 633
- EP-A- 0 389 206
- WO-A-91/05283

## Description

La présente invention porte sur les dispositifs de jonction de câbles optiques sous-marins, utilisés pour le raccordement de deux câbles ou la réparation d'un câble endommagé dont les deux parties de part et d'autre de la zone endommagée sont équivalentes à deux câbles à raccorder.

Les câbles optiques sous-marins sont à module optique central et à armure de résistance entourant le module optique. Le module optique est formé d'un faisceau de fibres optiques disposées libres sous tube métallique de protection recouvert d'une gaine isolante, dite gaine interne de câble. Le tube de protection est en particulier en acier inoxydable. La gaine interne est en polyéthylène. Les fils d'armure sont disposés de préférence en au moins deux couches autour du module optique. Ils confèrent au câble une résistance mécanique convenable à la traction et forment éventuellement voûte de résistance à la pression. Ils sont de manière courante recouverts d'une bande conductrice, en général en cuivre, enroulée ou soudée en long, qui est utilisée pour l'alimentation électrique d'équipements tels que répéteurs-régénérateurs interposés sur la liaison optique définie par l'ensemble des câbles raccordés. Une gaine extérieure de protection recouvre chaque câble

Pour le raccordement de deux de ces câbles, leurs éléments sont séparés les uns des autres le long de leurs portions terminales à raccorder. Ainsi, le tube de protection du faisceau de fibres et la gaine interne sont sectionnés à des longueurs différentes de l'extrémité pour laisser le faisceau de fibres en surlongueur sur le tube de protection; celui-ci est pareillement en surlongueur plus ou moins importante sur le bout de la gaine interne. Les fils d'armure ne sont pas sectionnés, ou ne le sont que sur une faible longueur, mais sont décâblés sur une longueur suffisante pour le raccordement des modules optiques. La bande conductrice est quant à elle sectionnée sur la longueur des fils d'armure décâblés. La gaine extérieure est également sectionnée et laisse la bande conductrice en légère surlongueur sur elle.

Dans la majorité des dispositifs de jonction réalisés jusqu'à présent, la jonction des deux faisceaux de fibres des deux câbles se fait en utilisant une technique d'épissurage monofibre. Cette technique implique de laisser une surlongueur importante sur chaque fibre de chaque faisceau et de stocker les surlongueurs des deux faisceaux de fibres dans le dispositif de jonction rendu alors relativement complexe et encombrant.

La technique de soudure multifibre mise en oeuvre actuellement permet avantageusement par rapport à la précédente de réaliser la jonction des deux faisceaux de fibres en une seule opération. Cette technique n'impose en outre de laisser qu'une surlongueur réduite sur chaque faisceau de fibres. Elle permet aussi l'utilisation d'un simple tube auxiliaire pour la protection de la soudure multifibre réalisée, ce tube auxiliaire s'étendant entre les deux tubes de protection des faisceaux de fibres et leur étant solidarisé.

Le document US-A-5 076 657 décrit un mode et une structure de connexion de fibres optiques sous tubes métalliques de protection, utilisant un tel tube auxiliaire soudé aux extrémités des tubes métalliques de protection, pour protéger la soudure réalisée. Il enseigne en outre que ce tube auxiliaire soit mis sous élongation, pour qu'il s'étende d'un tube de protection à l'autre et leur soit alors soudé, ceci afin d'éviter que la soudure protégée puisse être soumise à d'éventuels efforts ultérieurs de traction susceptibles de dégrader les caractéristiques de transmission optique.

Cette opération de mise sous élongation du tube auxiliaire est longue et peu aisée à contrôler. Elle peut en outre créer des points faibles le long du tube auxiliaire ou au niveau des soudures de ses extrémités à celles des tubes de protection.

Le document GB-A- 2 030 723 décrit une jonction de deux câbles optiques dont les fibres optiques sont sous tube de protection et ce tube entouré d'une ou de plusieurs couches de fils d'armure. Selon ce document, les extrémités des fibres optiques des deux câbles sont soudées et recouvertes par une ferrule, formée de deux demi-coquilles bloquées en vis-à-vis et ayant ses extrémités filetées. Les extrémités des fils d'armure sont tendues et enserrées entre des pièces coniques reçues dans les extrémités de la ferrule et sont ainsi bloquées par deux écrous terminaux vissés sur les extrémités filetées de la ferrule en étant elle-même bloquée longitudinalement sur lesdits câbles.

La présente invention a pour but de réaliser un dispositif de jonction de deux câbles optiques sous-marins à fibres optiques sous tube de protection entouré d'au moins une couche de fils d'armure, ayant une structure plus simple, plus aisée et plus rapide à monter que le dispositif connu de jonction de câbles de ce type et dans lequel on intègre les fils d'armure des deux câbles, pour leur raccordement et l'obtention de la résistance mécanique souhaitée au niveau du dispositif, sans utiliser des pièces coniques de serrage relativement longues à mettre en place.

La présente invention a pour objet un dispositif de jonction de deux câbles optiques sous-marins, lesdits câbles comportant chacun un faisceau de fibres optiques dans un tube de protection, des fils d'armure câblés en au moins une couche autour dudit tube de protection et une gaine externe de protection autour desdits fils d'armure câblés et ayant leurs parties constitutives séparées les unes des autres sur leurs portions terminales à raccorder, ledit dispositif de jonction comportant les portions terminales à raccorder desdits câbles, une épissure multifibre réalisée entre les extrémités des faisceaux de fibres en surlongueur sur les tubes de protection, un support métallique tubulaire s'étendant entre les tubes de protection et sur chacun d'eux et des moyens associés audit support pour le serrage radial des portions terminales des fils d'armure relativement audit support lui-même bloqué longitudinalement relativement aux tubes de protection, caractérisé en ce que chacun desdits portions terminales desdits câbles comporte une gaine interne recouvrant le tube de protection des fibres de ce câble et ayant son extrémité en retrait sur celle du tube sur la portion terminale de ce câble, en ce que ledit support présente un diamètre extérieur supérieur au diamètre extérieur des gaines internes des câbles, est monté en butée entre les gaines internes des câbles pour son blocage longitudinal et reçoit les portions terminales des fils d'armure tendus longitudinalement en une seule couche sur sa périphérie, et en ce que lesdits moyens associés de serrage radial des portions terminales des fils d'armure sont constitués par un manchon métallique externe monté et serti sur ledit support et sur les fils d'armure entre eux.

Cet dispositif de jonction présente avantageusement en outre au moins l'une des caractéristiques additionnelles suivantes:
- ledit support s'étend sensiblement de la gaine interne de l'un des câbles à celle de l'autre câble, est constitué d'un seul ou de plusieurs supports indépendants, alors montés bout à bout, et est formé de demi-coquilles longitudinales centrées l'une relativement à l'autre sur les tubes de protection.
- ledit support comporte en outre des éléments d'accrochage dudit support sur lesdits tubes de protection, contribuant au blocage longitudinal dudit support sur lesdits tubes de protection, lesdits éléments d'accrochage étant constitués chacun par un revêtement de friction porté par le support et saillant dans l'alésage du support et/ou réalisé sur les tubes de protection.
- La jonction comporte des moyens supplémentaires de mise en tension des fils d'armure déjà maintenus par lesdits moyens de serrage.

Les caractéristiques et avantages de la présente invention ressortiront de la description faite ci-après d'exemples de réalisation illustrés dans les dessins ci-joints. Dans ces dessins:
- la figure 1 illustre en coupe longitudinale partielle un dispositif de jonction selon l'invention,
- la figure 2 est une vue éclatée de l'une des pièces dite support interne du dispositif de jonction de la figure 1,
- la figure 2A est une vue en demi-coupe transversale et de côté de ce support interne,
- la figure 3 est une vue éclatée montrant en coupe une autre pièce, dite manchon, du dispositif de jonction de la figure 1,
- la figure 4 est une vue correspondant à la figure 3, pour une variante de réalisation dudit manchon,
- la figure 5 est une vue partielle correspondant à la figure 2 pour une variante de réalisation dudit support interne,
- la figure 6 est une vue correspondant à la figure 1 et montrant une variante de réalisation du dipositif de jonction selon l'invention,
- la figure 7 est une vue partielle en coupe axiale d'une autre variante de réalisation du dispositif de jonction selon l'invention.
- La figure 8 est une vue en élévation de l'un des éléments, dit support résistant, du dispositif de jonction de la figure 7,
- La figure 9 est une vue en coupe à échelle agrandie du détail IX de la figure 8,
- Les figures 10 et 11 sont deux vues en coupe transversale et en coupe axiale d'un autre élément, dit frette de voûte, du dispositif de jonction de la figure 7.

Avant de décrire le dispositif de jonction selon l'invention et les modes de réalisation illustrés dans les dessins, on précise tout d'abord la constitution des deux câbles optiques sous-marins à raccorder ou du câble optique sous-marin endommagé dont les deux parties à raccorder sont équivalentes à deux câbles et ainsi considérées et dites ci-après, ainsi que le raccordement de leurs fibres optiques et leur protection à ce niveau.

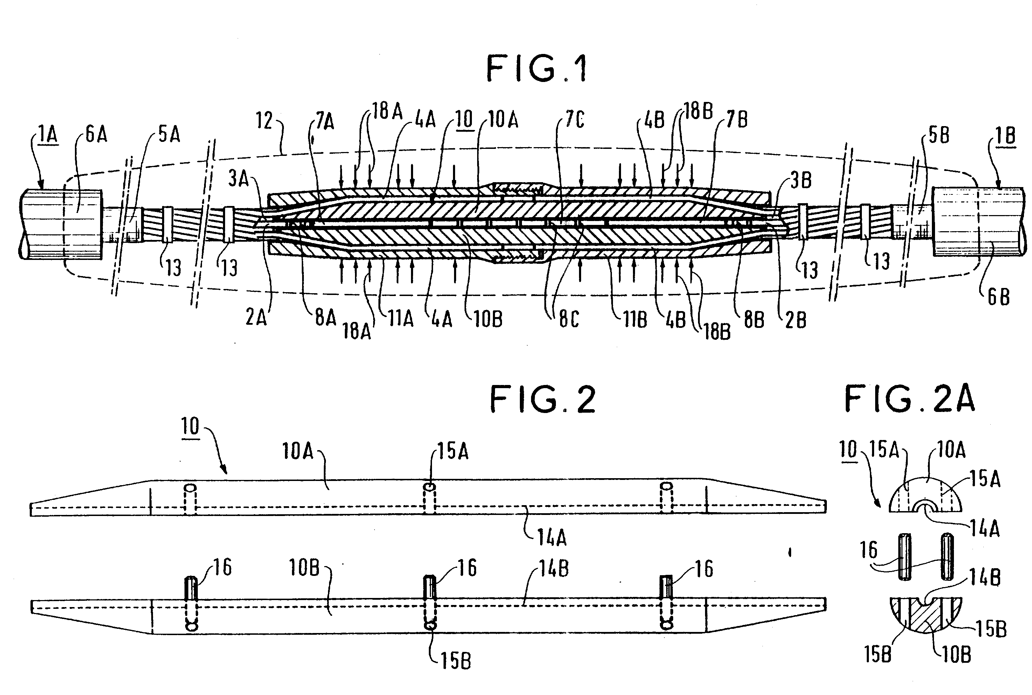

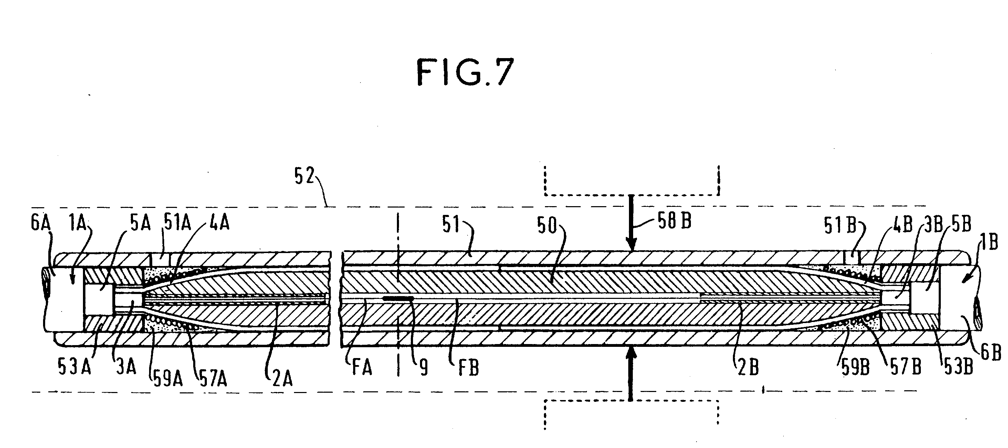

Les figures 1, 6 et 7 montrent ces deux câbles 1A, 1B. Chacun de ces câbles comporte un tube métallique central 2A, 2B contenant un faisceau de fibres optiques, non représenté ou simplement symbolisé et alors noté FA, FB (figure 7). Une gaine interne 3A, 3B recouvre ce tube central et ramène le diamètre du tube recouvert à une valeur convenable pour le câblage d'une armure de résistance. L'armure de résistance de chaque câble est formée de fils métalliques résitants, 4A, 4B, en particulier d'acier, enroulés en une ou de préférence au moins deux couches sur la gaine interne. Ces fils d'armure donnent au câble une résistance suffisante à la traction et forment éventuellement voûte de résistance à la pression. Une bande conductrice 5A, 5B, en particulier de cuivre, recouvre l'armure câblée sur la gaine interne et définit avec elle un conducteur électrique composite d'alimentation d'équipements, tels que répéteurs. Une gaine externe 6A, 6B recouvre ce conducteur composite. Elle protège et isole électriquement le câble.

Pour le raccordement des deux câbles, leurs parties constitutives sont séparées les unes des autres. Sur chaque extrémité préparée, on laisse par des sectionnements convenables d'une part la bande conductrice légèrement saillante sur le bout de la gaine externe et légèrement en retrait relativement à la gaine interne, avec les fils d'armure décâblés et largement saillants sur le bout de la gaine interne, et d'autre part le faisceau de fibres en surlongueur relativement importante sur le tube de protection qui est lui-même très saillant sur le bout de la gaine interne. Les fils d'armure décâblés sont saillants sur le tube de protection mais plus courts que le faisceau de fibres optiques.

Le raccordement des fibres optiques des deux faisceaux de ces deux câbles est réalisé en mettant en oeuvre la technique actuellement maîtrisée de soudure multifibre.

La soudure multifibre mise en oeuvre n'a pas été illustrée dans les dessins. On indique simplement qu'elle est exécutée sur un banc de soudure, monté sous les portions terminales des modules optiques des deux câbles après que les fils d'armure aient été décâblés jusqu'à l'extrémité de leur bande conductrice sectionnée. Ce banc de soudure assure le maintien des portions terminales des modules optiques et le maintien bout à bout des fibres des deux faisceaux en surlongueur sur leur tube de protection, pendant l'opération de soudure multifibre.

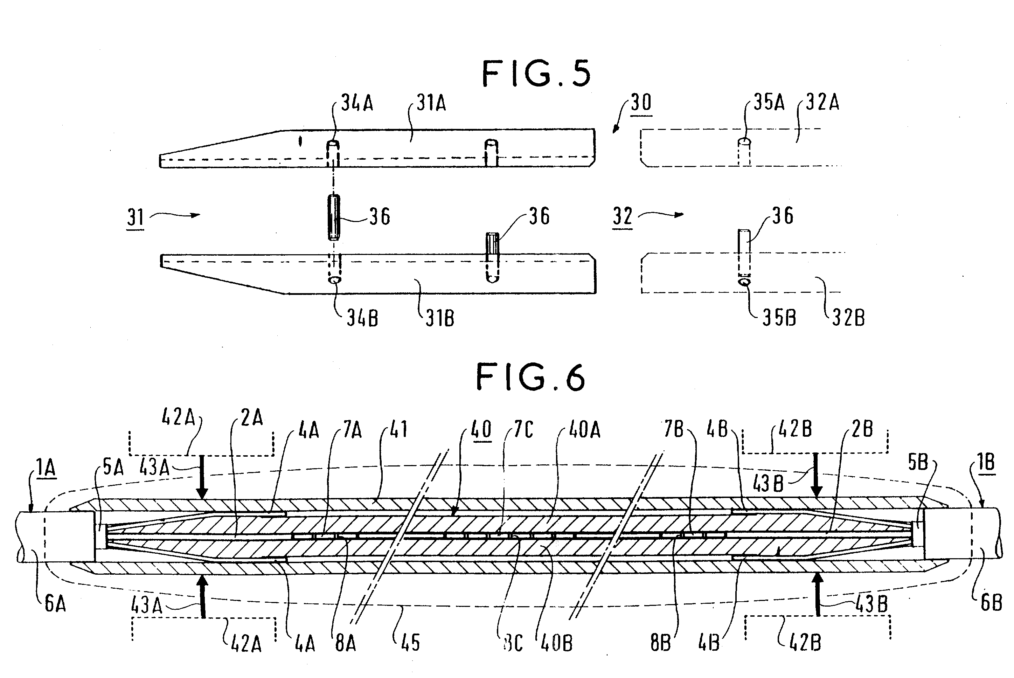

Cette soudure est de tenue éventuellement renforcée par un enrobage de résine. Elle est protégée selon les figures 1 et 6 par un tube métallique auxiliaire globalement désigné sous la référence numérique 7 venant la recouvrir et assurer la continuité avec les tubes de protection des faisceaux de fibres des câbles ou selon la figure 7 par un capillaire métallique la recouvrant, ainsi que schématisé globalement en 9, avant de réaliser la jonction proprement dite des deux câbles 1A et 1B.

Dans les figures 1 et 6, cette protection de la soudure est montrée assurée par deux tronçons de tube auxiliaire 7A, 7B, qui ont l'une de leurs extrémités solidarisée à l'extrémité des tubes 2A, 2B et qui sont eux-mêmes manchonnés par un troisième tronçon de tube 7C solidarisé à leur autre extrémité. Les deux tronçons 7A, 7B se substituent à un tube auxiliaire unique de longueur sensiblement double. Avant la soudure des faisceaux de fibres, ils sont enfilés partiellement dans l'un et l'autre des tubes de protection, ou en variante sur ces tubes de protection. Le troisième tronçon 7C de manchonnage peut lui-même être enfilé sur l'un des deux tronçons 7A, 7B avant la soudure mais est de préférence fendu en long et positionné directement sur les deux tronçons 7A, 7B, déjà mis en place sur la soudure, puis est fermé sur sa longueur.

Les tronçons 7A, 7B sont solidarisés aux tubes de protection 2A, 2B en particulier par sertissage, ainsi que schématisé en 8A et 8B sur leurs extrémités se recouvrant, et le tronçon 7C sur les tronçons 7A, 7B, ainsi que schématisé en 8C, ces sertissages étant préférés aux soudures de ces tubes. Ces solidarisations sont assurées sans aucune sollicitation en traction des tronçons de tube auxiliaire.

Dans le dispositif de jonction le tube auxiliaire, formé par un ou des tronçons de tube auxiliaire, assure alors la tenue en traction et en pression des câbles raccordés le simple capillaire n'assure par contre pas cette fonction.

Dans la réalisation illustrée dans la figure 1, le dispositif de jonction comporte, en outre, un support tubulaire métallique résistant 10, qui est monté sur les tubes de protection 2A, 2B et les tronçons 7A à 7C, s'étend d'une gaine interne 3A à l'autre 3B et reçoit sur sa périphérie les fils d'armure 4A, 4B des câbles. Il comporte aussi un manchon métallique externe 11 monté sur le support 10 et bloquant les fils d'armure sur ce dernier. Un surmoulage 12 illustré en pointillés recouvre le manchon 11, les fils d'armure laissés à nu et recâblés sur la gaine interne de part et d'autre du manchon, ainsi que les extrémités des gaines extérieures 6A, 6B. Il assure la continuité de la protection extérieure entre ces gaines extérieures.

Dans cette réalisation, les fils d'armure 4A, 4B au départ décâblés jusqu'à la bande conductrice sectionnée 5A, 5B sont recâblés sur la gaine interne 3A, 3B, de part et d'autre du support 10, puis tendus en long en une seule couche sur la périphérie de ce support. Des frettes 13 ou un ruban de frettage assurent le maintien des fils recâblés.

Le support 10 est précisé en regard de cette figure 1 ou des figures 2 et 2A. Il est formé de deux demi-coquilles longitudinales 10A et 10B, identiques, présentant une rainure longitudinale semi-cylindrique 14A, 14B dans leur face plane d'assemblage. Ces deux demi-coquilles présentent deux jeux de trous 15A, 15B débouchants et pratiqués perpendiculairement à leur face plane d'assemblage, des deux jeux étant de part et d'autre de la rainure. Des goupilles 16 montées dans ces jeux de trous jouent le rôle de détrompeurs et maintiennent ces deux demi-coquilles centrées l'une relativement à l'autre autour des tubes de protection des faisceaux de fibres et de leur soudure.

Ce support 10 est cylindrique et de diamètre extérieur nettement supérieur à celui des gaines internes. Seules ses portions terminales sont tronc-coniques. Leur diamètre extérieur décroît pour présenter à chaque extrémité sensiblement la même valeur que le diamètre extérieur de chaque gaine interne. Le diamètre intérieur est uniforme et juste supérieur à celui des tubes 2A, 2B et 7A à 7C.

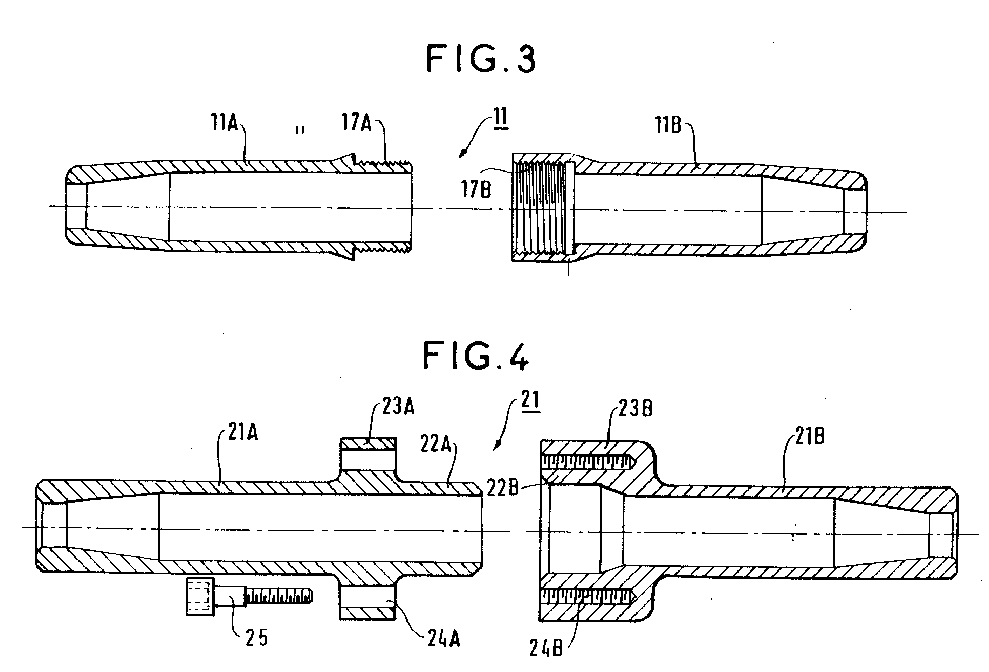

Le manchon 11 est quant à lui précisé en regard de cette même figure 1 ou de la figure 3. Il est formé de deux demi-manchons 11A et 11B identiques, à l'exception de leurs parties terminales d'assemblage l'une à l'autre qui sont l'une mâle 17A et l'autre femelle 17B. Ces parties mâle et femelle portent un filetage et un taraudage pour leur vissage l'une dans l'autre.

Ce manchon est sensiblement de même longueur que le support. Il est de diamètre intérieur adapté au diamètre extérieur du support qu'il recouvre pour ne laisser que le jeu nécessaire au coincement entre eux des fils d'armure 4A, 4B tendus en long. Ses parties terminales, autres que celles d'assemblage, sont intérieurement coniques. Leur diamètre intérieur reste légèrement supérieur au diamètre du câblage des fils d'armure sur leur gaine interne.

Les deux demi-manchons sont initialement enfilés sur les câbles avant la soudure des faisceaux et assemblés l'un à l'autre sur le support et les fils d'armure tendus sur la périphérie de ce dernier. Lors de cet assemblage, ils tendent l'un vers l'autre les fils d'armure recâblés. Ce manchon est en outre serti, ainsi que schématisé par les flèches 18A, 18B, de part et d'autre de ses extrémités d'assemblage 17A, 17B, sur la nappe de fils d'armure recouvrant le support 10, pour l'ancrage de ces fils dans le manchon serti.

La figure 4 illustre une variante du manchon 11 précité, le manchon selon cette variante étant désigné sous la référence 21.

Le manchon 21 est analogue à ce manchon 11, sauf en ce qui concerne le mode d'assemblage des deux demi-manchons 21A, 21B qui le constituent et donc de leurs parties terminales d'assemblage mâle et femelle 22A, 22B.

Ces deux parties terminales 22A, 22B s'emboîtent à frottement l'une dans l'autre. La partie mâle 22A présente un épaulement périphérique non terminal 23A, percé d'un jeu annulaire de trous 24A le traversant de part et d'autre. La partie femelle 22B est d'épaisseur accrue et forme quant à elle un épaulement périphérique 23B sur toute sa longueur relativement au corps de ce demi-manchon 21B. Cet épaulement 23B est percé d'un jeu annulaire de trous taraudés 24B ouverts sur sa face terminale, qui correspond au jeu de trous 24A. L'assemblage des deux demi-manchons 21A, 21B se fait par des vis de serrage 25 montées dans les jeux de trous 24A, 24B.

En se réferant à la figure 1 dans laquelle ce manchon 21 remplace le manchon 11, cet assemblage réalise un premier blocage des deux demi-manchons 21A, 21B l'un relativement à l'autre, pour lequel leurs épaulements 23A et 23B restent avec un écart entre eux, en conséquence du choix convenable de la longueur du manchon 21 totalement fermé à une valeur légèrement inférieure à celle de ce support. Ce premier blocage est suivi du sertissage des deux demi-manchons sur le support, correspondant aux sertissages schématisés en 18A et 18B sur la figure 1. Un deuxième blocage à l'aide des vis est alors réalisé pour tendre les fils d'armure et ainsi rattraper un éventuel jeu au niveau des zones recâblées de part du manchon 21.

La figure 5 illustre une variante de réalisation du support 10 précité des figures 1 et 2, qui est utilisable en particulier lorsque le manchon du dispositif de jonction est du type de celui 21 de la figure 4. Le support selon cette variante est désigné sous la référence globale 30. Il est analogue au support 10, mais est en outre divisé en deux demi-supports notés 31 et 32, chacun eux-mêmes constitué de deux demi-coquilles 31A, 31B et 32A, 32B. Deux jeux de trous 34A, 34B, 35A, 35B dans les demi-coquilles et des goupilles 36 assurent leur centrage.

En se référant à la figure 1, on comprend que ces deux demi-supports se montent l'un à la suite de l'autre entre les deux gaines internes 3A, 3B des câbles. Ils laissent un léger possible jeu entre eux.

En se référant en outre à la figure 4, le blocage d'assemblage l'un à l'autre des demi-manchons 21A, 21B, réalisé après leur sertissage sur les demi-supports, élimine simultanément le jeu médian entre ces demi-supports, en rattrapant celui pouvant exister sur les zones extérieures où les fils d'armure ont été recâblés. Il permet ainsi d'obtenir une légère mise en compression des tronçons de tube auxiliaires 7A, 7B et 7C.

La figure 6 illustre une variante de réalisation du dispositif de jonction de la figure 1. Ce dispositif de jonction comporte également un support tubulaire métallique et résistant 40 et un manchon métallique 41 le recouvrant et coinçant les fils d'armure sur ce support, dont les différences sont simplement précisées.

Ce support 40 et le manchon 41 sont dits longs par rapport au support 10 et au manchon 11 correspondants de la figure 1.

Le manchon 41 est en outre en une seule partie de diamètre intérieur uniforme et juste suffisant pour qu'il coulisse sur la gaine extérieure 6A ou 6B de l'un des câbles. Le support 40 reste quant à lui formé de deux demi-coquilles centrées comme précédemment à l'aide de goupilles.

Dans cette réalisation selon la figure 6, chacun des câbles a sa gaine interne sectionnée sensiblement jusqu'au même niveau que la bande conductrice 5A, 5B et de ce fait non visible. Les fils d'armure libres en bout de la bande conductrice 5A, 5B sont directement positionnés en long, en une seule couche, sur la périphérie du support 40. Ils sont sectionnés pour ne s'étendre les uns et les autres que sur une partie de la demi-longueur du support.

Le manchon 41, positionné en place sur le support et les fils d'armure sur ce dernier, recouvre les extrémités des gaines extérieures 6A, 6B des câbles. Il est serti sur le support 40 dans les seules zones quasi-terminales, ainsi que schématisé par les ensembles en pointillés 42A, 42B et les flèches 43A, 43B.

Un surmoulage 45 enrobe le dispositif de jonction et assure la continuité de protection extérieure avec les gaines extérieures. En variante le manchon a la partie médiane de son corps préalablement revêtu d'une gaine extérieure, pour la seule réalisation de surmoulages latéraux de continuité de protection extérieure avec les gaines extérieures des câbles.

En regard de la figure 7, le dispositif de jonction comporte un support métallique résistant 50, alésé avec précision relativement au diamètre des tubes de protection et bloqué sur ceux-ci, ainsi qu'il est expliqué ci-après. Ce support 50 s'étend d'un tube de protection 2A à l'autre 2B et sur ces tubes de protection en venant d'un côté et de l'autre en butée sur le bout des gaines internes 3A et 3B. Ce support est épais et de diamètre extérieur très supérieur à celui de la gaine interne. Ses portions terminales sont tronconiques, de diamètre terminal ramené à celui de la gaine interne. Il reçoit sur sa périphérie les fils d'armure décâblés, qui sont recâblés sur lui, tendus longitudinalement et en une seule couche.

Le dispositif de jonction comporte, également un manchon métallique 51, monté sur le support 50, en serrant radialement les fils d'armure recâblés sur celui-ci, et un surmoulage final 52, montré en pointillés recouvrant le manchon 51 et s'étendant de la gaine externe de l'un des câbles à celle de l'autre.

Il comporte, en outre, de chaque côté, d'une part une frette de voûte 53A, 53B, de type bague, bloquant autour de l'extrémité de la gaine interne les fils d'armure câblés en plusieurs couches et laissés à nu par la bande conductrice en retrait, et une frette 57A, 57B, formée par un filin métallique enroulé et serré hélicoïdalement autour des fils d'armure recâblés sur la portion terminale du support 50, et d'autre part un bouchon de résine 59A, 59B remplissant l'espace libre entre la frette en filin métallique et le manchon métallique.

Ce manchon métallique 51 est en une seule pièce de diamètre intérieur juste suffisant pour coulisser sur la gaine extérieure des câbles et sur les fils d'armure recâblés en long sur le support 50. Il est bloqué, après sa mise en place d'une gaine extérieure à l'autre, par sertissage à forte pression sur le support en enserrant et bloquant les fils d'armure recâblés, ainsi que schématisé d'un seul côté en 58B. Il présente, sensiblement à chacune de ses extrémités, un trou 51A, 51B d'injection de résine formant le bouchon 59A, 59B précité.

Dans ce dispositif de jonction réalisé sans tube auxiliaire de protection de la soudure et des extrémités ainsi raccordées des deux faisceaux de fibres optiques, le support 50 assure directement la continuité mécanique entre les tubes de protection 2A, 2B.

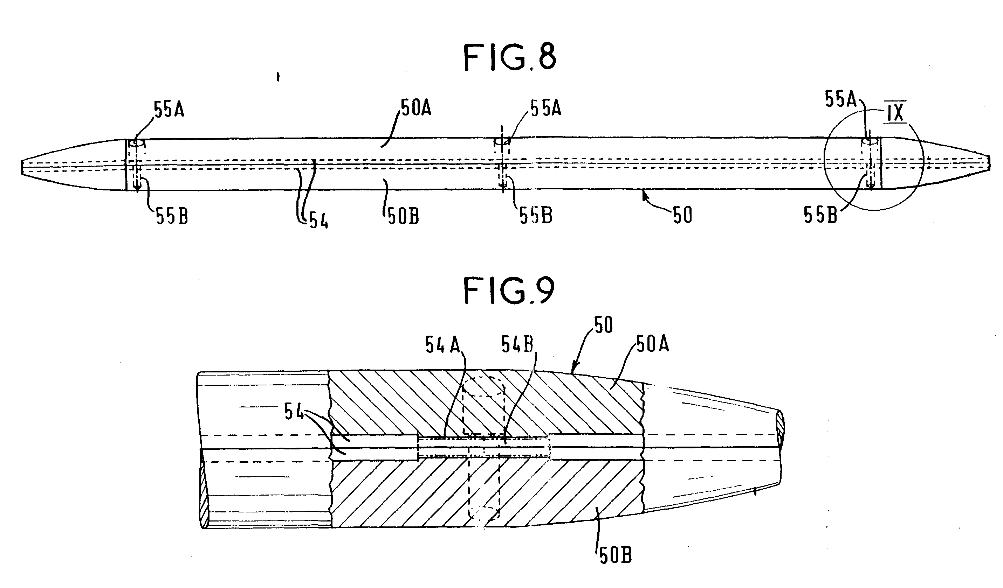

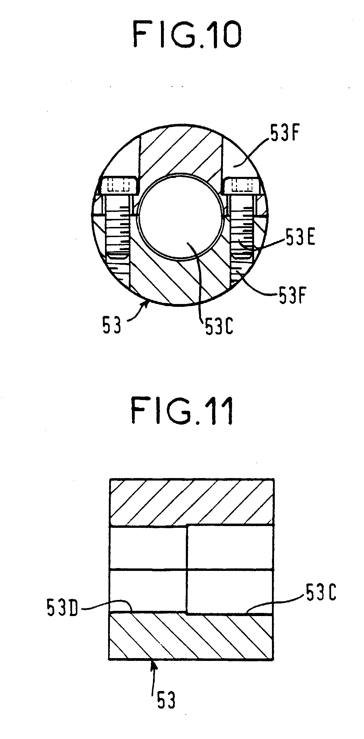

Le support 50 et les moyens pour son blocage total sur les tubes de protection sont précisés en regard des figures 8 et 9.

Ce support 50 est formé de deux demi-coquilles longitudinales 50A et 50B, identiques et assemblables l'une à l'autre, à alésage semi-circulaire 54. L'une des demi-coquilles est percée et l'autre taraudée simultanément, pour présenter des jeux de couples de trous 55A, 55B. Elles sont assemblées à l'aide de vis se vissant dans les trous 55B et s'encastrant et se bloquant dans les trous 55A. Ces jeux de trous sont réalisés sur la partie semi-cylindrique de chacune des demi-coquilles, de part et d'autre de l'alésage; ils sont illustrés au nombre de trois, l'un étant médian et les deux autres pratiquement aux extrémités de la partie semi-cylindrique.

Pour le blocage en place du support 50 sur les deux tubes de protection, avec l'assemblage des deux demi-coquilles qui le constitue, il est prévu une zone épaulée intérieurement 54A, recouverte d'un revêtement de friction 54B, en formant avec ce revêtement une zone d'accrochage du support sur chacun des tubes de protection. Cette zone d'accrochage est proche de chacune des extrémités du support, de diamètre intérieur calibré et longueur limitée. Elle est formée de part et d'autre de la transition entre chaque portion terminale du support et sa partie cylindrique, et présente l'un des jeux de couples de trous 55A et 55B centré sur elle. Le revêtement de friction 54B est de faible épaisseur et présente un état de surface rugueux ou granuleux à particules rigides. Il est notamment en carbure de tungstène.

On précise les frettes de voûte en regard des figures 10 et 11, où la frette de voûte illustrée est désignée sous la référence 53.

Elle est constituée par une bague formée de préférence par deux demi-bagues assemblées l'une à l'autre, non référencées séparément. Cette bague a un alésage 53C présentant un léger épaulement interne 53D d'un côté et sur la moitié de sa longueur sensiblement. L'épaisseur d'épaulement correspond à celle de la bande conductrice 5A ou 5B des câbles, dans la figure 7.

Les deux demi-bagues sont montées autour de chaque bande conductrice et autour des fils de voûte recâblés sur la partie terminale de la gaine interne sous-jacente. Elles sont mises en butée par leur épaulement interne 53D sur le bout de la bande conductrice. Elles sont ainsi assemblées et bloquées par deux vis 53E insérées dans un couple de trous 53F prévus dans l'une et l'autre des demi-bagues de part et d'autre de leur alésage. Ces vis s'encastrent dans la bague.

Lors de la réalisation du dispositif de jonction de la figure 7, l'injection des bouchons 59A, 59B de résine se fait avant de réaliser l'enrobage 52 et de préférence également avant de sertir le manchon 51 sur le support. Ces bouchons solidarisent les fils d'armures et les filins de frettage, pour permettre à l'ensemble de mieux supporter les efforts de traction exercés sur la jonction alors quasi-finale et ultérieurement sur le dispositif de jonction.

Le serrage, par le manchon 51 serti sur le support, des fils de l'armure tendus sur ce dernier, permet l'entière reprise des efforts de traction par cet ensemble et évite toute sollicitation des faisceaux de fibres optiques soudés l'un à l'autre.

Dans cette réalisation selon la figure 7, les deux zones d'accrochage du support 50 sur les tubes de protection sont réalisées directement sur le support. Ceci permet une grande précision de réalisation de ces zones, exécutées en atelier. En variante non illustrée, il est possible cependant de réaliser sur site de telles zones d'accrochage sur les tubes de protection et non pas sur le support ou encore de rapporter plus simplement entre le support et chaque tube de protection une bague de friction, fendue ou élastique, mise en place lors de la réalisation de la jonction. Une telle bague est d'épaisseur faible, assure le blocage longitudinal du support sur les tubes de protection et présente intérieurement et extérieurement un état de surface rugeux.

On note en outre que le dispositif de jonction est de longueur réduite et assure directement la continuité entre les bandes conductrices sectionnées, par ses pièces métalliques de continuité des fils d'armure.

## Revendications

1. Dispositif de jonction de deux câbles optiques sous-marins, lesdits câbles (1A, 1B) comportant chacun un faisceau de fibres optiques (FA, FB) dans un tube de protection (2A, 2B), des fils d'armure (4A, 4B) câblés en au moins une couche autour dudit tube de protection et une gaine externe de protection (6A, 6B) autour des fils d'armure câblés et ayant leurs parties constitutives séparées les unes des autres sur leurs portions terminales à raccorder, ledit dispositif de jonction comportant les portions terminales desdits câbles (1A, 1B), une épissure multifibre réalisée entre les extrémités des faisceaux de fibres en surlongueur sur les tubes de protection, un support métallique tubulaire (10, 30, 40, 50) s'étendant entre les tubes de protection et sur chacun d'eux et des moyens (11, 21, 41, 51) associés audit support pour le serrage radial des portions terminales des fils d'armure relativement audit support lui-même bloqué longitudinalement relativement aux tubes de protection, caractérisé en ce que chacun desdits portions terminales desdits câbles comporte une gaine interne (3A, 3B) recouvrant le tube de protection des fibres de ce câble et ayant son extrémité en retrait sur celle de ce tube sur la portion terminale de ce câble, en ce que ledit support (10, 30, 40, 50) présente un diamètre extérieur supérieur au diamètre extérieur des gaines internes (3A, 3B) des câbles (A1, 1B), est monté en butée entre les gaines internes (3A, 3B) des câbles pour son blocage longitudinal et reçoit les portions terminales des fils d'armure (4A, 4B) tendus longitudinalement et disposés en une seule couche sur sa périphérie, et en ce que lesdits moyens de serrage radial des portions terminales des fils d'armure (4A, 4B) sont constitués par un manchon métallique externe (11, 21, 41, 51) monté et serti sur ledit support et sur les fils d'armure entre eux.

2. Dispositif de jonction selon la revendication 1, caractérisé en ce que ledit support (10, 30, 40, 50) est formé de deux demi-coquilles longitudinales (10A, 10B; 31A, 31B, 32A, 32B, 40A, 40B, 50A, 50B), équipées de moyens de centrage (15A, 15B, 16; 34A, 34B, 35A, 35B, 36, 55A, 55B) l'une à l'autre sur les tubes de protection et entre eux.

3. Dispositif de jonction selon l'une des revendications 1 et 2, caractérisé en ce que ledit support (30) est formé de deux demi-supports indépendants (31, 32), montés bout à bout sensiblement et chacun constitué de deux demi-coquilles longitudinales (31A, B; 32A, B) équipées de moyens de centrage (34A, B, 35A, B) l'une à l'autre sur les tubes de protection.

4. Dispositif de jonction selon l'une des revendications 1 à 3, caractérisé en ce que ledit manchon (11, 21) est formé de deux demi-manchons (11A, B; 21A, B) montés coulissants sur les fils d'armure et présentant des premières parties terminales d'emboîtage et d'assemblage, dites parties mâle et femelle, et des deuxièmes parties terminales de butée sur les parties terminales dudit support.

5. Dispositif de jonction selon la revendication 4, caractérisé en ce que les parties mâle et femelle des deux demi-manchons ont des filetages (17A, 17B) pour leur vissage l'une dans l'autre.

6. Dispositif de jonction selon la revendication 4, caractérisé en ce que les parties mâle et femelle desdits deux demi-manchons sont coulissantes l'une dans l'autre, sont équipées, pour la partie mâle, d'un épaulement périphérique (23A) non terminal et percé d'un premier jeu annulaire de trous (24A) et, pour la partie femelle, d'une surépaisseur (23B) sur sa longueur dans laquelle est formé un deuxième jeu de trous (24B) complémentaire du premier jeu, et sont assemblées par des vis de blocage (25) en assurant, en outre, une mise en tension supplémentaire desdits fils d'armure de part et d'autre des deux demi-manchons assemblés.

7. Dispositif de jonction selon l'une des revendications 1 à 3, caractérisé en ce que ledit manchon (41, 51) s'étend en continu d'une portion terminale à l'autre des gaines externes (6A, 6B) desdits câbles.

8. Dispositif de jonction selon l'une des revendications 1 à 7, caractérisé en ce qu'il comporte en outre deux éléments d'accrochage (54A, 54B) dudit support (50) sur lesdits tubes de protection (2A; 2B), contribuant au blocage longitudinal dudit support sur lesdits tubes de protection.

9. Dispositif de jonction selon la revendication 8, caractérisé en ce que lesdits éléments d'accrochage (54A, 54B) sont constitués chacun par un revêtement de friction réalisé sur ledit support et saillant dans l'alésage dudit support.

10. Dispositif de jonction selon la revendication 9, caractérisé en ce que lesdits éléments d'accrochage (54A, 54B) comportent chacun une zone épaulée intérieurement dans ledit alésage dudit support, recouverte par ledit revêtement de friction.

11. Dispositif de jonction selon la revendication 8, caractérisé en ce que lesdits éléments d'accrochage sont constitués par une couche de revêtement réalisée sur lesdits tubes de protection (2A, 2B).

12. Dispositif de jonction selon la revendication 8, caractérisé en ce que lesdits éléments d'accrochage sont constitués par une bague à revêtement interne et externe de friction, montée entre chacun desdits tubes de protection et ledit support.

13. Dispositif de jonction selon l'une des revendications 9 à 12, caractérisé en ce que le revêtement est en carbure de tungstène.

14. Dispositif de jonction selon l'une des revendications 9 à 13 et dans lequel ledit support est formé de deux demi-coquilles équipées de moyens de centrage, caractérisé en ce que lesdits moyens de centrage sont des moyens de blocage à serrage desdites demi-coquilles (50A, 50B) l'une sur l'autre, prévus au niveau desdits éléments d'accrochage (54A, 54B) dudit support (50) sur lesdits tubes de protection (2A, 2B).

15. Dispositif de jonction selon l'une des revendications 9 à 14 et dans lequel les portions terminales desdits fils d'armure recâblés sont bloquées par des frettes, caractérisé en ce que l'une desdites frettes, dite frette de voûte (53), est constituée par une bague de blocage des fils d'armure sur le bout de chaque gaine interne (3A, 3B).

16. Dispositif de jonction selon l'une des revendications 9 à 15 et dans lequel les portions terminales desdits fils d'armure recâblés sont bloquées par des frettes, caractérisé en ce que lesdites frettes comportent un filin résistant (57A; 57B) de blocage desdits fils d'armure recâblés sur chaque extrémité dudit support (50) et un bouchon de résine (59A, 59B) réalisé sur chaque filin, solidarisant le filin et lesdits fils d'armure.

17. Dispositif de jonction selon la revendication 16, caractérisé en ce que ledit manchon (51) est percé de deux trous (51A, 51B) prévus pour l'injection à travers chacun d'eux dudit bouchon de résine (59).

## Patentansprüche

1. Vorrichtung zur Verbindung von zwei Unterwasser-Lichtleitfaserkabeln, wobei die Kabel (1A, 1B) je ein Lichtleitfaserbündel (FA, FB) in einem Schutzrohr (2A, 2B), Armierungsdrähte (4A, 4B), die in mindestens einer Schicht um das Schutzrohr gewickelt sind, und eine äußere Schutzhülle (6A, 6B) um diese aufgewickelten Armierungsdrähte herum aufweisen, wobei ihre Bestandteile an ihren zu verbindenden Endabschnitten voneinander getrennt werden, wobei die Verbindungsvorrichtung die zu verbindenden Endabschnitte der Kabel (1A, 1B), eine Vielfaserspleißung zwischen den Enden der in Überlänge über die Schutzrohre vorstehenden Faserbündel, einen rohrförmigen metallischen Träger (10, 30, 40, 50), der sich zwischen den Schutzrohren und auf jedem von ihnen erstreckt, und dem Träger zugeordnete Mittel (11, 21, 41, 51) für das radiale Einklemmen der Endabschnitte der Armierungsdrähte in Bezug auf den Träger selbst aufweist, der selbst in Bezug auf die Schutzrohre in Längsrichtung blokkiert ist, dadurch gekennzeichnet, daß jeder der Endabschnitte der Kabel eine innere Hülle (3A, 3B) aufweist, die das Schutzrohr der Fasern dieses Kabels umgibt und deren Ende bezüglich des Rohrs im Endabschnitt dieses Kabels verkürzt ist, daß der Träger (10, 30, 40, 50) einen Außen-durchmesser aufweist, der größer ist als der Außendurchmesser der inneren Hüllen (3A, 3B) der Kabel (1A, 1B), gegen die inneren Hüllen (3A, 3B) der Kabel zu seiner Längsblokkierung in Anschlag montiert ist und die Endabschnitte der in Längsrichtung gespannten Armierungsdrähte (4A, 4B) in einer Schicht auf seinem Umfang aufnimmt, und daß die radialen Klemmittel für die Endabschnitte der Armierungsdrähte (4A, 4B) aus einer äußeren Metallmuffe (11, 21, 41, 51) bestehen, die auf den Träger und die Armierungsdrähte montiert und aufgeklemmt ist.

2. Verbindungsvorrichtung nach Anspruch 1, dadurch gekennzeichnet, daß der Träger (10, 30, 40, 50) aus zwei Längs-Halbschalen (10A, 10B; 31A, 31B; 32A, 32B; 40A, 40B; 50A, 50B) besteht, die mit Mitteln (15A, 15B, 16; 34A, 34B, 35A, 35B, 36, 55A, 55B) zum Zentrieren auf den Schutzrohren und zueinander versehen sind.

3. Verbindungsvorrichtung nach einem der Ansprüche 1 und 2, dadurch gekennzeichnet, daß der Träger (30) aus zwei unabhängigen Halbträgern (31, 32) besteht, die im wesentlichen aneinander anstoßend montiert sind und je aus zwei Längs-Halbschalen (31A, 31B; 32A, 32B) bestehen, die mit Mitteln (34A, 34B, 35A, 35B) zum gegenseitigen Zentrieren auf den Schutzrohren versehen sind.

4. Verbindungsvorrichtung nach einem der Ansprüche 1 bis 3, dadurch gekennzeichnet, daß die Muffe (11, 21) aus zwei Halbmuffen (11A, 11B; 21A, 21B) besteht, die auf den Armierungsdrähten gleitend montiert sind und die erste Endbereiche zum Zusammenfügen und Zusammenbau und zweite Endbereiche für den Anschlag gegen die Endbereiche des Trägers aufweisen.

5. Verbindungsvorrichtung nach Anspruch 4, dadurch gekennzeichnet, daß die ersten Endbereiche der beiden Halbmuffen Gewinde (17A, 17B) für ihr Ineinanderschrauben aufweisen.

6. Verbindungsvorrichtung nach Anspruch 4, dadurch gekennzeichnet, daß die beiden Endbereiche der beiden Halbmuffen ineinander gleiten und daß der innere Teil eine Umfangsschulter (23A) nicht im Endbereich und mit einem ersten ringförmigen Satz von Löchern (24A) versehen und der andere Teil eine Überdicke (23B) über seine Länge aufweist, in der ein zweiter Satz von Löchern (24B) ausgebildet ist, der zum ersten Satz komplementär ist, und daß sie durch Blockierschrauben (25) zusammengebaut werden, die außerdem ein zusätzliches Spannen der Armierungsdrähte zu beiden Seiten der beiden zusammengebauten Halbmuffen gewährleisten.

7. Verbindungsvorrichtung nach einem der Ansprüche 1 bis 3, dadurch gekennzeichnet, daß die Muffe (41, 51) sich durchgehend von einem Endabschnitt zum anderen der Außenhüllen (6A, 6B) der Kabel erstreckt.

8. Verbindungsvorrichtung nach einem der Ansprüche 1 bis 7, dadurch gekennzeichnet, daß sie weiter zwei Befestigungselemente (54A, 54B) für den Träger (50) auf den Schutzrohren (2A; 2B) aufweist, die zur Längsblockierung des Trägers auf den Schutzrohren beitragen.

9. Verbindungsvorrichtung nach Anspruch 8, dadurch gekennzeichnet, daß die Befestigungsmittel (54A, 54B) je aus einem Reibungsbelag bestehen, der auf dem Träger ausgebildet ist und in der Bohrung des Trägers vorsteht.

10. Verbindungsvorrichtung nach Anspruch 9, dadurch gekennzeichnet, daß die Befestigungsmittel (54A, 54B) je eine innen vorspringende Zone in der Bohrung des Trägers aufweisen, die mit dem Reibungsbelag bedeckt ist.

11. Verbindungsvorrichtung nach Anspruch 8, dadurch gekennzeichnet, daß die Befestigungsmittel aus einem Belag bestehen, der auf den Schutzrohren (2A, 2B) ausgebildet ist.

12. Verbindungsvorrichtung nach Anspruch 8, dadurch gekennzeichnet, daß die Befestigungsmittel aus einem Ring mit innerem und äußerem Reibungsbelag bestehen, der zwischen jedem der Schutzrohre und dem Träger montiert ist.

13. Verbindungsvorrichtung nach einem der Ansprüche 9 bis 12, dadurch gekennzeichnet, daß der Belag aus Wolframkarbid besteht.

14. Verbindungsvorrichtung nach einem der Ansprüche 9 bis 14, bei der der Träger aus zwei mit Zentriermitteln versehenen Halbschalen besteht, dadurch gekennzeichnet, daß die Zentriermittel Mittel zur Klemmblockierung der Halbschalen (50A, 50B) aufeinander sind, die in Höhe der Befestigungsmittel (54A, 54B) des Trägers auf den Schutzrohren (2A, 2B) vorgesehen sind.

15. Verbindungsvorrichtung nach einem der Ansprüche 9 bis 14, bei der die Endabschnitte der wieder aufgewickelten Armierungsdrähte von Klemmringen blockiert werden, dadurch gekennzeichnet, daß einer der Klemmringe ein Gewölbering (53) ist und aus einem Ring zur Blockierung der Armierungsdrähte auf dem Ende jeder inneren Hülle (3A, 3B) besteht.

16. Verbindungsvorrichtung nach einem der Ansprüche 9 bis 14, bei der die Endabschnitte der wieder aufgewickelten Armierungsdrähte von Klemmringen blockiert werden, dadurch gekennzeichnet, daß die Klemmringe eine widerstandsfähige Trosse (57A; 57B) zur Blockierung der auf jedes Ende des Trägers (50) wieder aufgewickelten Armierungsdrähte und einen Stopfen aus Harz (59A, 59B) aufweisen, der auf jeder Trosse ausgebildet ist und die Trosse und die Armierungsdrähte fest miteinander verbindet.

17. Verbindungsvorrichtung nach Anspruch 16, dadurch gekennzeichnet, daß die Muffe (51) zwei Löcher (51A, 51B) aufweist, die für die Injektion des Harzstopfens (59) vorgesehen sind.

## Claims

1. A splice device for splicing together two under-sea optical cables, each of the cables (1A, 1B) including a bundle of optical fibers (FA, FB) inside a protective tube (2A, 2B), armoring wires (4A, 4B) which are stranded to form at least one layer around said protective tube and a protective outer sheath (6A, 6B) around the stranded armoring wires, the cables having their component parts separated from one another over those of their end portions which are to be interconnected, said splice device including the end portions of said cables (1A, 1B), a multifiber splice between the ends of the bundles of fibers, which fibers are left to project from their respective protective tubes, a tubular metal support (10, 30, 40, 50) extending between the protective tubes and over each of them, and means (11, 21, 41, 51) associated with said support to radially clamp the end portions of the armoring wires relative to the support, itself locked longitudinally relative to the protective tubes, said splice device being characterized in that each of said end portions of said cables includes an inner sheath (3A, 3B) covering the protective tube of the fibers of said cable, the end of which is set back from the end of the tube on the end portion of said cable, and in that said support (10, 30, 40, 50) has an outside diameter greater than the outside diameter of the inner sheaths (3A, 3B) of the cables (1A, 1B), is mounted so that it abuts between the inner sheaths (3A, 3B) of the cables for longitudinal locking purposes, and receives the end portions of the armoring wires (4A, 4B) longitudinally tensioned and disposed in a single layer on its periphery, and in that said radial clamping means of the end portions of the armoring wires (4A, 4B) are constituted by an outer metal sleeve (11, 21, 41, 51) mounted and crimped on said support and on the armoring wires between the support and the sleeve.

2. A splice device according to claim 1, characterized in that said support (10, 30, 40, 50) is formed by two longitudinal half-shells (10A & 10B, 31A, 31B, 32A, 32B, 40A, 40B, 50A, 50B), equipped with centering means (15A, 15B, 16; 34A, 34B, 35A, 35B, 36, 55A, 55B) for centering them on each other on the protective tubes and therebetween.

3. A splice device according to claim 1 or 2, characterized in that said support (30) is formed by two independent half-supports (31, 32) mounted substantially end-to-end, each half-support being constituted by two longitudinal half-shells (31A & 31B, 32A & 32B) equipped with centering means (34A & 34B, 35A & 35B) for centering them on each other on the protective tubes.

4. A splice device according to any one of claims 1 to 3, characterized in that said sleeve (11, 21) is formed by two half-sleeves (11A & 10B, 21A & 21B) slidably mounted on the armoring wires and having respective "male" and "female" interfittable assembly first end portions which fit together to assemble the sleeve, and respective abutment second end portions which abut against the end portions of said support.

5. A splice device according to claim 4, characterized in that the male and female portions of the two half-sleeves have respective threads (17A & 17B) so that they can be screwed together.

6. A splice device according to claim 4, characterized in that the male and female portions of said two half-sleeves can be slid together, the male portion being provided with a peripheral shoulder (23A) not situated at its end and provided with a first annular set of through holes (24A), and the female portion being provided with a longitudinally-extending portion of extra thickness (23B) in which a second set of holes (24B) that are complementary to the first set are formed, the male and female portions being assembled together by means of locking screws (25), thereby applying additional tension to said armoring wires at either end of the two assembled half-sleeves.

7. A splice device according to any one of claims 1 to 3, characterized in that said sleeve (41, 51) extends continuously between the respective end portions of the outer sheaths (6A & 6B) of the cables.

8. A splice device according to any one of claims 1 to 7, characterized in that it further includes two catching members (54A, 54B) for catching said support (50) on said protective tubes (2A; 2B), which members contribute to longitudinally locking said support on said protective tubes.

9. A splice device according to claim 8, characterized in that each of said catching members (54A, 54B) is constituted by a friction covering provided on the inside of said support and projecting into the bore of the support.

10. A splice device according to claim 9, characterized in that each of said catching members (54A, 54B) includes an inwardly-projecting shoulder region inside said bore of said support, which region is covered with said friction covering.

11. A splice device according to claim 8, characterized in that said catching members are constituted by a covering layer provided on said protective tubes (2A, 2B).

12. A splice device according to claim 8, characterized in that said catching members are constituted by a ring having an inside friction covering and an outside friction covering, and mounted between each of said protective tubes and said support.

13. A splice device according to any one of claims 9 to 12, characterized in that the covering is made of tungsten carbide.

14. A splice device according to any one of claims 9 to 13, in which said support is formed of two half-shells equipped with centering means, said splice device being characterized in that said centering means are means for clamp locking said half-shells (50A, 50B) to one another, which means are provided level with said catching members (54A, 54B) for catching said support (50) on said protective tubes (2A, 2B).

15. A splice device according to any one of claims 9 to 14, and in which the end portions of said armoring wires, as restranded, are locked by means of bands, said splice device being characterized in that a "pressure-resisting" one of said bands (53) is constituted by a ring for locking the armoring wires on the end of each inner sheath (3A, 3B).

16. A splice device according to any one of claims 9 to 15, and in which the end portions of said armoring wires, as restranded, are locked by means of bands, said splice device being characterized in that said bands comprise strong servings (57A; 57B) for locking the restranded armoring wires on each end of said support (50), and a resin plug (59A, 59B) provided on each serving to secure the serving to said armoring wires.

17. A splice device according to claim 16, characterized in that said sleeve (51) is provided with two through holes (51A, 51B) via which said resin plug (59) can be injected.
